# EUROPEAN PATENT APPLICATION

(11) **EP 3 886 021 A1**
(43) Date of publication of application: **29.09.2021**
(21) Application number: 21163636.0
(22) Date of filing: 19.03.2021
(51) Int. Cl.: G06Q 10/08

(54) **A METHOD FOR IDENTIFYING CONSUMPTION OF A FOOD PRODUCT HELD IN A FOOD PACKAGE BY USING A MOBILE DEVICE**

(30) Priority: 23.03.2020 EP 20164799
(71) Applicant: Tetra Laval Holdings & Finance S.A., 1009 Pully (CH)
(72) Inventor: EGIDI, Sara, 41126 Modena (IT); MOLARI, Gabriele, 41125 Modena (IT)
(74) Representative: Tetra Pak - Patent Attorneys SE

(57) **Abstract**

A method (700) for identifying consumption of a food product held in a food package (100, 200, 300) by using a mobile device (400) is provided. The method comprises capturing (702) image data (606) depicting a section (102, 202, 302) of the food package by using a camera (402) of the mobile device (400), wherein the section (102, 202, 302) comprises a printed code (104, 204, 304) and an opening device (106, 206, 306), identifying (704) a first sub-set (108, 208, 308) of the image data (606) depicting the printed code (104, 204, 304), determining (706) identification data (508, 608) based on the first sub-set (108, 208, 308) of the image data (606), identifying (708) a second sub-set (110, 210, 310) of the image data (606) depicting the opening device (106, 206, 306), and determining (710) a state of the opening device (106, 206, 306) based on the second sub-set (110, 210, 310) of the image data (606), wherein the state is selected from a group consisting of an opened state or a closed state.

## Description

### Technical Field

The invention relates to packaging technology. More particularly, it is related to a method for identifying consumption of a food product held in a food package by using a mobile device, as well as the mobile device configured to identify consumption of the food product.

### Background Art

Today most food packages are marked with a best before date to provide information to a consumer about an expiry date. To provide even more information to the consumer, some food producers have marked the food packages with unique codes, such as QR codes, such that the consumer can scan the unique codes and thereby get access via a mobile phone to additional information about the food products held in the food packages. For instance, by using the unique codes information about where the food products come from and where this has been processed and packaged can be provided to the consumer.

Even though it today exists technologies to identify individual packages and provide package-unique information to the consumer, there is a need to even further improve information exchange between food producers and the consumer. For instance, by knowing where the food products are consumed it can be possible to collect valuable data for the food producers about how the food products are handled after they have left the stores, which in turn may provide for that improved logistics can be achieved.

### Summary

It is an object of the invention to at least partly overcome one or more of the above-identified limitations of the prior art. In particular, it is an object to provide a method and a device for determining proof of consumption, e.g. by determining when a protective barrier, such as a straw hole cover, shielding off a food product from surroundings is broken.

According to a first aspect it is provided a method for identifying consumption of a food product held in a food package by using a mobile device. The method may comprise capturing image data depicting a section of the food package by using a camera of the mobile device, wherein the section comprises a printed code and an opening device, identifying a first sub-set of the image data depicting the printed code, determining identification data based on the first sub-set of the image data, identifying a second sub-set of the image data depicting the opening device, and determining a state of the opening device based on the second sub-set of the image data, wherein the state is selected from a group consisting of an opened state or a closed state.

An advantage with having the image data related to both the printed code and the opening device is that the state of the opening device can reliably be linked to an identity, expressed as to the identification data, of the package. In this way, since the state of the opening device is in turn related to whether the food product held inside the package has been consumed or not, it is also possible to determine when the food product has been consumed.

The method may further comprise determining position data by using the mobile device, transmitting the position data to a server, and storing the identification data, the state of the opening device and the position data on the server.

An advantage with using the position data is that it can be determined where the food product is consumed. This in turn may be helpful information for improving logistics and distribution such that more efficient distribution of the food products can be achieved, which may result in cost efficiency effects as well as environmental effects.

The position data can be determined by using the mobile device, which may be GPS equipped or configured in any other way for determining the position data.

The method may further comprise determining if the position data is within an activated area or a de-activated area.

A de-activated area may be inside a retailer's facilities and an activated area may be outside a retailer's facilities. Having the possibility to determine whether the position data is within the activated area or the de-activated area, when defined in this way, has an advantage in that proof of consumption detected within the retailer's facilities can be distinguished from proof of consumption detected outside the retailer's facilities, that is, an area where the food product is intended to be consumed.

The opening device may be chosen from a group consisting of a cap arrangement and a straw hole.

The cap arrangement may be a threaded spout with a corresponding threaded cap, but other types of cap arrangement are equally possible. For instance, the cap may be a hinged lid.

The opening device may be a cap arrangement and the printed code may be placed on an underside of a cap.

An advantage with this is that the opening device is required to be in the opened state for enabling reading of the printed code. Put differently, the cap is removed before the printed code is read. As an effect, it can indirectly be concluded that the opening device is in the opened state when the printed code is read.

The printed code may be a unique two-dimensional code.

By having a unique two-dimensional code it is possible to uniquely identify the package. The wording "unique" should in this context be given a broad interpretation. For instance, if the printed code has been used on a package a decade ago, it may still be used and still, in the context of this patent application, be considered unique.

The mobile device may be associated with a user identity, and the method may further comprise transmitting the user identity to the server, and storing the identification data, the state of the opening device and the user identity on the server.

An advantage of having access to the user identity is that proof of consumption, and also which kinds of products that are consumed, which may be determined based on the identification data, can be linked to the user identity. This in turn provides for that also software applications related to eating habits and environmental impacts of a particular person can be made.

The method may further comprise receiving product information related to the identification data from the server.

An advantage with providing the product information to the mobile device, and thereafter displaying this to the user of the mobile device, is that information of allergens or similar can be made clear to the user. A further advantage of providing the product information to the user is that the user will be more prone to use a software application implementing the method.

The steps of capturing the image data depicting the section of the food package, identifying the first sub-set of the image data, determining the identification data based on the first sub-set, identifying the second sub-set of the image data depicting the opening device, and determining the state of the opening device based on the second sub-set of the image data may be performed in the server.

An advantage of having these steps performed in the server is that less processing capabilities is required on the mobile device. A further advantage is that the software can easily be updated if run on the server compared to on the mobile device, since an update of the mobile device may require a consent of the user of the mobile device.

The method may further comprise transmitting the identification data to the server, and receiving template data related to the identification data from the server, wherein the template data is taken into account in the step of determining the state of the opening device.

By knowing the identification data of the package it is possible to retrieve information about a type of package and/or a placement of the printed code in relation to the opening device. This and other similar information may be compiled into the template data that is sent to be mobile device for facilitating and improving the step of determining the state of the opening device.

According to a second aspect it is provided a mobile device configured to identify consumption of a food product held in a food package, said mobile device comprising a camera configured to capture image data depicting a section of the food package, wherein the section comprises a printed code and an opening device, a control circuit configured to execute a first identification function configured to identify a first sub-set of the image data depicting the printed code, an identification data determination function configured to determine identification data based on the first sub-set of the image data, a second identification function configured to identify a second sub-set of the image data depicting the opening device, and a state determination function configured to determine a state of the opening device based on the second sub-set of the image data, wherein the state is selected from a group consisting of an opened state or a closed state.

The advantages described above with respect to the first aspect also apply to this second aspect.

The control circuit may further be configured to execute a position determination function configured to determine position data by using the mobile device, and a transceiver configured to transmit the position data to a server.

The control circuit may further be configured to execute a user identity determination function configured to determine a user identity, wherein the transceiver may further be configured to transmit the user identity to a server.

According to a third aspect it is provided a server configured to identify consumption of a food product held in a food package, said server comprising a transceiver configured to receive image data depicting a section of the food package from a mobile device, wherein the section comprises a printed code and an opening device, a control circuit configured to execute a first identification function configured to identify a first sub-set of the image data depicting the printed code, an identification data determination function configured to determine identification data based on the first sub-set of the image data, a second identification function configured to identify a second sub-set of the image data depicting the opening device, and a state determination function configured to determine a state of the opening device based on the second sub-set of the image data, wherein the state is selected from a group consisting of an opened state or a closed state.

The advantages described above with respect to the first aspect also apply to this third aspect.

The transceiver may further be configured to receive position data, and the control circuit is further configured to execute a position data area mapping function configured to determine if the position data is within an activated area or a de-activated area.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1A is an example of image data depicting a top section of a package with a cap in place.
Fig. 1B is an example of image data depicting the top section also illustrated in fig. 1A, but with the cap removed.
Fig. 2 is another example of image data depicting a top section of a package, but unlike the package illustrated in fig. 1A and 1B, the package is provided with a straw hole instead of the cap.
Fig. 3A is still another example of image data depicting a top section of a package with a straw hole, but unlike the package illustrated in fig. 2, a straw is placed in the straw hole.
Fig. 3B illustrates the package illustrated in fig. 3A, but with the straw removed from the straw hole, thereby leaving a punctured straw hole coverage.
Fig. 3C illustrates an underside of a cap forming part of the opening device, wherein a printed code is provided on an underside of the cap.
Fig. 4 illustrates a mobile device used for capturing image data depicting a package with a cap removed.
Fig. 5 schematically illustrates data exchange between the mobile device and a server via a communications network according to a first set up example.
Fig. 6 schematically illustrates data exchange between the mobile device and the server via the communications network according to a second set up example.
Fig. 7 is a flow chart illustrating steps of a method for identifying consumption of a food product held in a food package by using a mobile device.
Fig. 8 illustrates the mobile device configured to identify consumption of a food product held in a food package.
Fig. 9 illustrates the server configured to identify consumption of the food product held in the food package.

### Detailed description

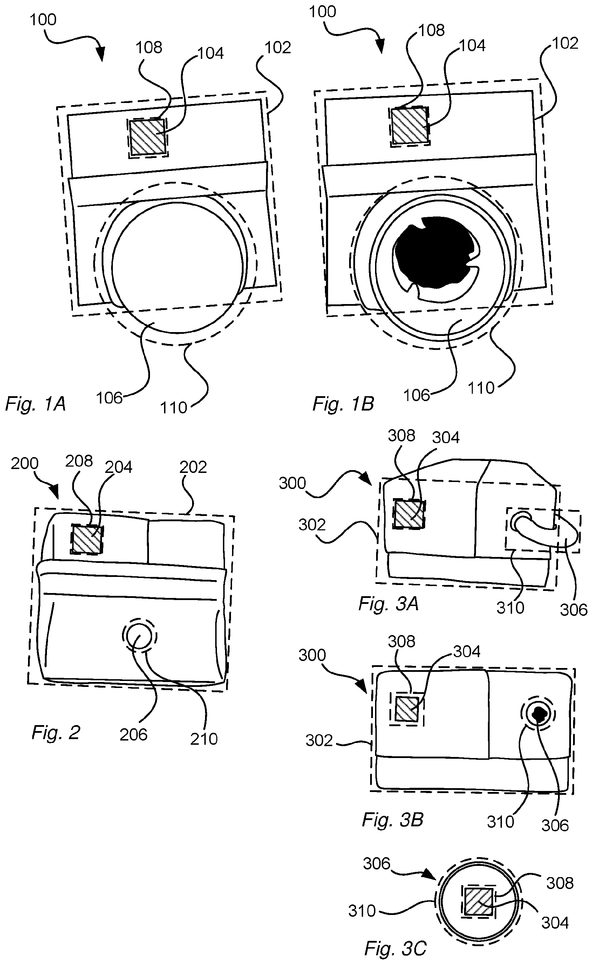

Fig. 1A illustrates by way of example a package 100 comprising a section 102, herein a top section. The section 102 can, as illustrated, be provided with a printed code 104, herein in the form of a two-dimensional code, e.g. a QR code. Further, an opening device 106, herein a spout with a cap, can be provided. In image data depicting the package 100, the printed code 104 may be part of a first sub-set 108 of the image data, and the opening device 106 may be part of a second sub-set 110 of the image data.

The printed code 104 may be used for identifying the package 100, that is, the printed code may comprise a unique code that provides for that the package can be identified, which in turn provides for that the package can be traced throughout the life cycle of the package 100. The printed code 104 can be printed in various ways, for instance by using digital printing technology or by using an inkjet printer. Further the printed code may be achieved by embossing or in any other way effecting the material such that a code can be provided. To identify the package 100, the first sub-set of the image data 108 may be input to an image data processing software configured to read and interpret the printed code 104. Further, as an additional alternative, the printed code 104 may be produced such that this is not visible to the human eye, but to the camera.

The opening device 106 can be opened or closed. By using the second sub-set 110 of the image data, the image processing software can determine whether or not the package 100 is in an opened state, as illustrated by way of example in fig. 1A, or in a closed state as illustrated by way of example in fig. 1B. As illustrated, when having the opening device 106 embodied as the spout and cap, the opened state may be defined as that the cap is placed on the spout, and the closed state may be defined as that the cap is removed from the spout.

By having the first sub-set 108 and the second sub-set 110 being part of the image data, that is, capturing information about the printed code 104 and the opening device 106 at the same time, it is possible to conclude when in time a food product held in the package 100 is consumed, wherein consuming the food product can be defined as opening the package 100.

Fig. 2 illustrates another example of a package 200 comprising a section 202, more particularly a top section as in Fig. 1A and 1B. Also in line with fig. 1A and 1B, the package 200 can comprise a printed code 204 and an opening device 206. In the image data depicting the package 200, a first section 208 can comprise image data related to the printed code 204 and a second section 210 can comprise image data related to the opening device 210 in line with fig. 1A and 1B.

However, unlike the package 100 illustrated in fig. 1A and 1B, the opening device 206 of the package 200 illustrated in fig. 2 is a straw hole and not the spout and cap arrangement illustrated in fig. 1A and 1B. Even though the opening device 206 in this example is the straw hole 206, it is still possible for the image processing software to determine whether this is in the opened state or in the closed state, which in turn may be used for determining whether the food product held inside the package 200 is consumed or not. If correctly assessed by the image processing software, the package 200 illustrated in fig. 2 is in the closed state, which implies that the straw hole comprises an unbroken cover, that is, no straw is identified to have been pushed through the straw hole.

Fig. 3A and 3B illustrate yet another example of a package 300 with a section 302. In line with the packages 100, 200 illustrated in fig. 1A, 1B and 2, the package 300 can comprise a printed code 304 and an opening device 306. A first section 308 of image data can comprise the printed code 304 and a second section 310 of the image data can comprise the opening device 306.

As in fig. 2, the opening device 306 comprises the straw hole. However, unlike the package 200 illustrated in fig. 2, the opening device 306 is in the opened state. Fig. 3A illustrates a situation where the straw has been pushed through the cover of the straw hole and thereafter has been left in the straw hole. Fig 3B illustrates a different situation, which is also an example of the opened state, in which the straw has been pushed through the cover, but not left in the straw hole, thereby leaving a broken cover of the straw hole.

Fig. 3C illustrates still an example of a package in the opened state. In this example the opening device 306 comprises a cap, and a corresponding spout provided on the package (not illustrated). The printed code 304 is placed on an underside of the cap 306, that is, a side of the cap not visible to a consumer when the opening device 306 is in a closed state, that is, when the cap is placed on the spout. In this way, the first section 308 related to the printed code 304 will be a sub-set of the second section 310 related to the opening device 306, herein the cap 306.

A difference with this example compared to the examples illustrated in fig. 3A and 3B is that the cap must be removed from the package to make it possible to read the printed code 304. Therefore, for the example illustrated in fig. 3C, in case the printed code 304 can be read by the image processing software it can be concluded that the opening device 306 is in the opened state. As an effect, a risk for the image processing software to making an incorrect assessment regarding the opened or closed state can be reduced by having the printed code 304 placed on the underside of the cap.

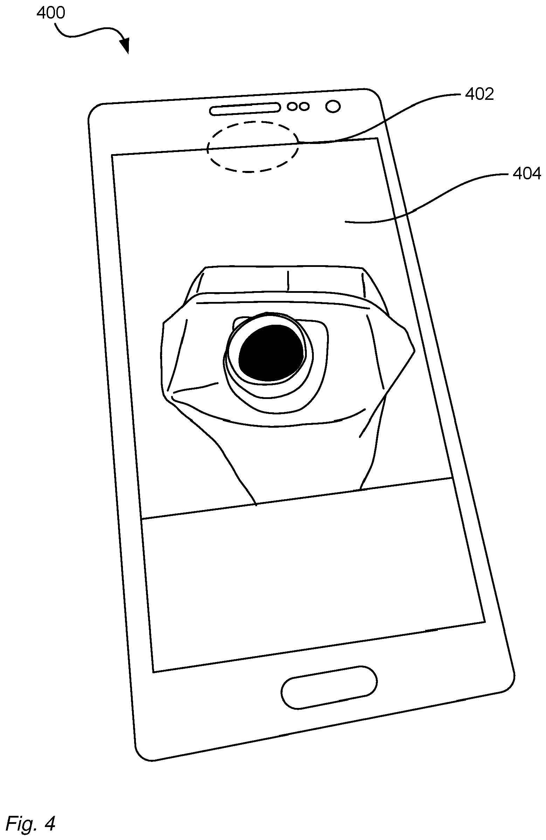

Fig. 4 illustrates by way of example a mobile device 400 that can be used for capturing image data depicting a package with a cap removed. The mobile device 400, which may be a mobile phone, such as a smart phone, a tablet or any other electronic device fit for the purpose, can comprise a camera 402. In the example illustrated in fig. 4, the camera 402 is a rear camera, that is a camera placed on the rear side of the mobile device. As illustrated, the mobile device 400 may, on a front side, comprise a display 404 presenting image data captured by the camera 402.

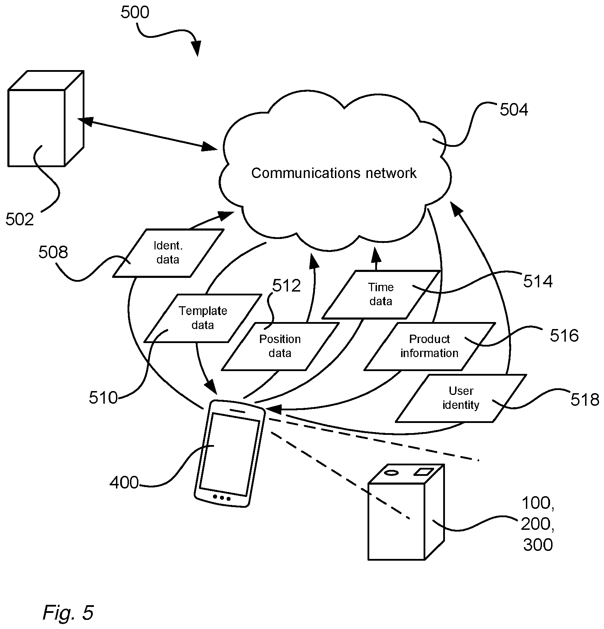

Fig. 5 schematically illustrates data exchange between the mobile device 400 and a server 502 via a communications network 504 according to a first set up example.

In this example, image data depicting the package 100, 200, 300 illustrated in any of the figs 1A, 1B, 2, 3A, 3B or 3C can be captured by the mobile device 400, and based on the image data of the first section 108, 208, 308, which is related to the printed code, identification data 508 can be determined, that is, an identity of the package 100, 200, 300 can be established. The identification data 508 can be transmitted from the mobile device 400 to the communications network 504 and from there to the server 502.

To determine whether the package 100, 200, 300 is in the closed state, that is, not yet consumed, or in the opened state, that is, consumed, template data 510 may be transmitted from the server 502 via the communications network 504 to the mobile device 400. Since the identity of the package is established it is namely possible to retrieve information about the package 100, 200, 300 from the server 502 or a database connected to the server 502 (not illustrated) about which kind of opening device the package is equipped with and also how the opening device is placed in relation to the printed code. Hence, by having the template data 510 and feeding this into the image processing software, a more reliable and a faster assessment of the state of the opening device can be made.

In addition, position data 512 may be transmitted from the mobile device 400 to the server 502, that is, a position where the image data was captured. The position data 512 may be of interest to increase understanding of how the food product held in the package is consumed, which in turn may result in more efficient logistics and distribution.

The position data 512 may also be used to detect counterfeit products. For instance, if the position data 512 is far away from a retailer to which the package was shipped, this may be an indication that the package, and hence also the product, is not legit, and therefore, as a consequence, it may not be safe to consume.

Time data 514 associated with the capture of the image data may also be transmitted from the mobile device 400 to the server 502 via the communications network 504. In a similar manner as the position data 512, the time data 514 may be used to increase the understanding of consumer behaviors and/or to indicate a risk that the package is not legit.

Optionally, as an effect of that the package 100, 200, 300 is identified, product information 516 may be transmitted from the server 502, or a database connected to the server 502, via the communications network 504 to the mobile device 400. The product information 516 may comprise e.g. best before date, but it may also be information indirectly connected to the product, such as recipes. In case, the time data 514 is established, the product information 516 may adapted based on this information, for instance, in that the product information 516 comprises information regarding how many days that remain before the best before day is due.

Further, since the mobile device 400 and/or the software application used for capturing the image data may be linked to a user identity, the user identity 518 can be transmitted from the mobile device 400 to the server 502 via the communications network 504. Having access to the user identity 518 provides additional possibilities to increase the understanding of the consumer behavior (even though this in some jurisdictions may require an acceptance made by the user of the mobile device). Further, by having access to the user identity 518, it is possible to provide user-specific product information 516.

Even though presented in a certain order, it should be understood that the data exchange can be made in different orders as well and also, if not related to one another, exchanged simultaneously.

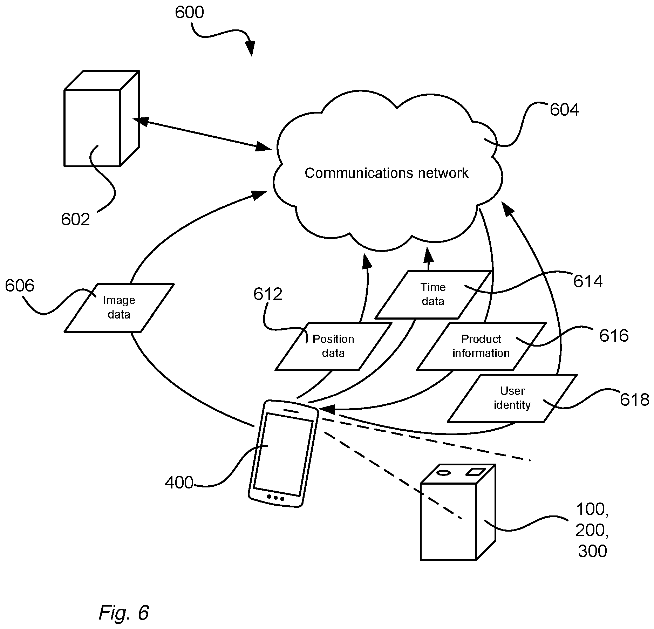

Fig. 6 illustrates data exchange between the mobile device and the server via the communications network according to a second set up example.

Similar to the first set up example illustrated in fig. 5, a server 602 is communicatively connected to the mobile device 400 via a communications network 604. However, unlike the first set up example, in the second set up example image data 606 can be transmitted from the mobile device 400 to the server 602 via the communications network 604. In the server 602, based on the image data 606, identification data can determined. That is, instead of using the mobile device 400 for determining the identification data as in the first set up example illustrated in fig. 5, the mobile device 400 is solely used for capturing the image data 606 and transmitting this to the server 502 in which the identification data can be determined. Still an option, since determining the identification data may comprise a number of sub-steps is that part of a process for determining the identification data is made in the mobile device 400 and part of the process is made in the server 602.

In line with the first set up example illustrated in fig. 5, position data 612 may be transmitted from the mobile device 400, which may be GPS equipped, to the server 602. Further, also in line with the first set up example, time data 614 may be transmitted from the mobile device 400 to the server 602. Still further and also in line with the first set up example, product information 616 may be transmitted from the server 602 via the communications network 604 to the mobile device 400. In addition, also in line with the first set up example, user identity 618 may be transmitted from the mobile device 400 to the server 602 via the communications network 614.

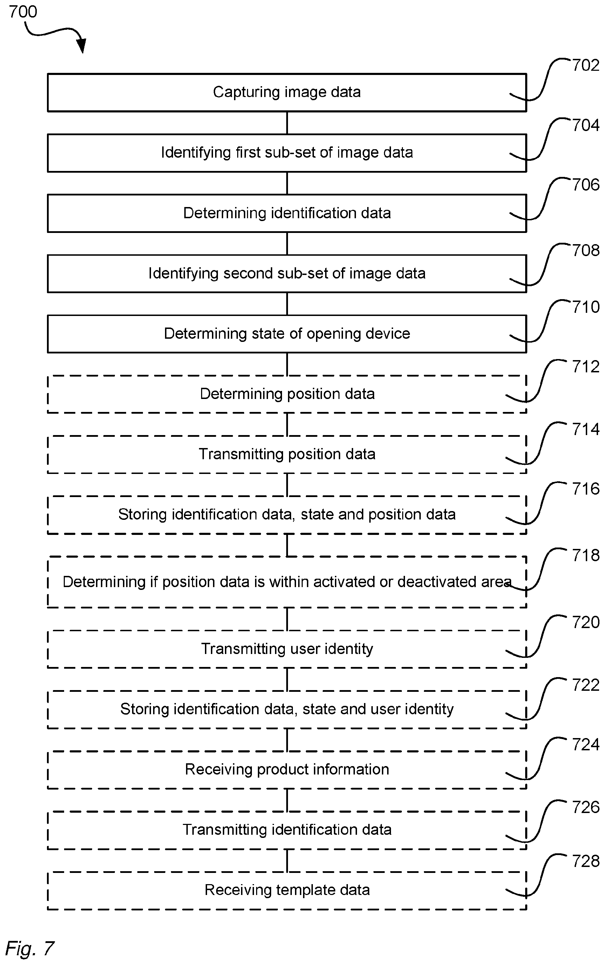

Fig. 7 is a flow chart illustrating steps of a method for identifying consumption of the food product held in the food package 100, 200, 300 by using the mobile device 400.

In a first step 702, image data 606 depicting a section 102, 202, 302 of the food package can be captured by using a camera 402 of the mobile device 400. As presented above, the section 102, 202, 302 can comprise a printed code 104, 204, 304 and an opening device 106, 206, 306.

In a second step 704, a first sub-set 108, 208, 308 of the image data 606 depicting the printed code 104, 204, 304 can be identified.

In a third step 706, identification data 508, 608 can be determined based on the first sub-set 108, 208, 308 of the image data 606.

In a fourth step 708, a second sub-set 110, 210, 310 of the image data 606 depicting the opening device 106, 206, 306 can be identified.

In a fifth step 710, a state of the opening device 106, 206, 306 based on the second sub-set 110, 210, 310 of the image data 606 can be determined. The state may be selected from a group consisting of an opened state or a closed state.

Optionally, according to a sixth step 712, position data 512, 612 can be determined by using the mobile device 400, and, according to a seventh step 714, the position data 512, 612 may be transmitted to the server 502, 602, and, according to an eighth step 716, the identification data 508, 608, the state of the opening device 106, 306 and the position data 512, 612 may be stored on the server 502, 602.

Optionally, according to a ninth step 718, it can be determined if the position data 512, 612 is within an activated area or a de-activated area.

Optionally, according to a tenth step 720, the user identity 518, 618 can be transmitted to the server 502, 602, and according to an eleventh step 722 the identification data 508, the state of the opening device 106, 206, 306 and the user identity 618 can be stored on the server 502, 602.

Optionally, in an twelfth step 724, the product information product information 516, 616 related to the identification data 508 from the server 502 can be received.

The first step 702, the second step 704, the third step 706, the fourth step 708 and the fifth step 710 may be performed in the server 602.

Alternatively, in a thirteenth step 726, the identification data 508 can be transmitted to the server 502, and, according to a fourteenth step 728, the template data 510 related to the identification data 508 can be received from the server 502, wherein the template data 510 is taken into account in the step of determining 710 the state of the opening device 106, 206, 306, e.g. as explained above.

Even though described in a certain order, the different steps may also be performed in other orders.

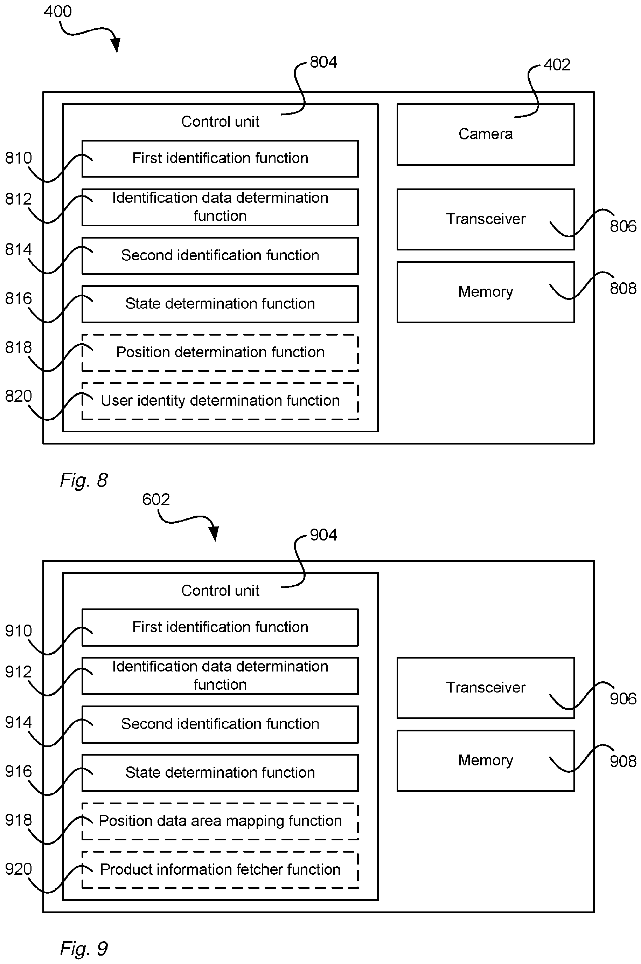

Fig. 8 illustrates the mobile device 400 configured to identify consumption of the food product held in the food package 100, 200, 300 according to a first example. As described and illustrated in fig. 4, the mobile device 400 may be equipped with the camera 402.

For handling data, the mobile device 400 may comprise a control unit 804, such as a processor, a transceiver 806 for transmitting and receiving data, and a memory 808 for storing the data.

The control circuit 804 can be configured to execute a first identification function 810 configured to identify a first sub-set 108, 208, 308 of the image data 606 depicting the printed code 104, 204, 304. Further, it may be configured to execute an identification data determination function 812 configured to determine identification data 508 based on the first sub-set 108, 208, 308 of the image data 606. Still further, it may be configured to execute a second identification function 814 configured to identify a second sub-set 110, 210, 310 of the image data depicting the opening device 106, 206, 306. Even further, it may be configured to execute a state determination function 816 configured to determine a state of the opening device 106, 206, 306 based on the second sub-set 110, 210, 310 of the image data. The state may be selected from a group consisting of the opened state or the closed state.

The control circuit 804 may also be configured to execute a position determination function 818 configured to determine position data 512, 612 by using the mobile device 400, which may be GPS equipped, and a transceiver 806 configured to transmit the position data 512, 612 to a server 502, 602.

The control circuit 804 may further be configured to execute a user identity determination function 820 configured to determine the user identity 518, 618, wherein the transceiver 806 can further be configured to transmit the user identity 518, 618 to the server 502, 602.

Fig. 9 illustrates the server 602 configured to identify consumption of the food product held in the food package 100, 200, 300 according to a second example.

The server 602 may comprise a transceiver 906 configured to receive the image data 606 depicting the section 102, 202, 302 of the food package from the mobile device 400, wherein the section 102, 202, 302 comprises a printed code 104, 204, 304 and an opening device 106, 206, 306.

Further, the server 602 may comprise a control circuit 904 configured to execute a first identification function 910 configured to identify the first sub-set 108, 208, 308 of the image data 606 depicting the printed code 104, 204, 304, an identification data determination function 912 configured to determine the identification data 508 based on the first sub-set 108, 308 of the image data 606, a second identification function 914 configured to identify the second sub-set 110, 310 of the image data 606 depicting the opening device 106, 206, 306, and a state determination function 916 configured to determine a state of the opening device 106, 206, 306 based on the second sub-set 110, 210, 310 of the image data 606, wherein the state is selected from a group consisting of the opened state or the closed state.

Further, the transceiver 906 may further be configured to receive the position data 612, and the control circuit 904 may further be configured to execute a position data area mapping function 918 configured to determine if the position data 612 is within the activated area or the de-activated area.

The control unit 904 may also be configured to execute a product information fetcher function 920 configured to fetch the production information related to the identification data 508. The transceiver 906 may further be configured to transmit the product information 616 to the mobile device 400.

The first example illustrated in fig. 8 is linked to the mobile device 400 illustrated in fig. 5, that is, in this example the package 100, 200, 300 is identified by the mobile device 400 and the identification data 508 is transmitted to the server 504. The second example illustrated in fig. 9 is linked to the server 602 illustrated in fig. 6. In the example illustrated in fig. 6, the image data 606 is captured by the mobile device 400, but the identification data is extracted by the server 602.

As stated above, it may be determined whether the opening device is in the opened state or the closed state. The closed state may be defined as a state in which the package has not been opened before, e.g. a tamper evidence ring is still connected to the cap, and the opened state may include any other states, e.g. the cap may be removed or the cap may be screwed onto the package again, sometimes referred to as re-closed state.

As explained above, by using the position data that may be linked to the image data, it may be determined whether the mobile device was at a time of capturing the image data within the activated or the de-activated area. The de-activated area may for instance be a retailer's premises, and the activated area may be areas outside the retailer's premises. By defining the de-activated and the activated areas in this way, it is possible to avoid that the package is identified before this has been bought.

From the description above follows that, although various embodiments of the invention have been described and shown, the invention is not restricted thereto, but may also be embodied in other ways within the scope of the subject-matter defined in the following claims.

## Claims

1. A method (700) for identifying consumption of a food product held in a food package (100, 200, 300) by using a mobile device (400), said method comprising
capturing (702) image data (606) depicting a section (102, 202, 302) of the food package by using a camera (402) of the mobile device (400), wherein the section (102, 202, 302) comprises a printed code (104, 204, 304) and an opening device (106, 206, 306),
identifying (704) a first sub-set (108, 208, 308) of the image data (606) depicting the printed code (104, 204, 304),
determining (706) identification data (508, 608) based on the first sub-set (108, 208, 308) of the image data (606),
identifying (708) a second sub-set (110, 210, 310) of the image data (606) depicting the opening device (106, 206, 306), and
determining (710) a state of the opening device (106, 206, 306) based on the second sub-set (110, 210, 310) of the image data (606), wherein the state is selected from a group consisting of an opened state or a closed state.

2. The method according to claim 1, further comprising
determining (712) position data (512, 612) by using the mobile device (400),
transmitting (714) the position data (512, 612) to a server (502, 602), and
storing (716) the identification data (508), the state of the opening device (106, 306) and the position data (512, 612) on the server (502, 602).

3. The method according to claim 2, further comprising
determining (718) if the position data (512, 612) is within an activated area or a de-activated area.

4. The method according to any one of the preceding claims, wherein the opening device (106, 206, 306) is chosen from a group consisting of a cap arrangement (106) and a straw hole (206, 306).

5. The method according to any one of the claims 1 to 4, wherein the opening device (106, 206, 306) is a cap arrangement (306) and the printed code (304) is placed on an underside of a cap.

6. The method according to any one of the preceding claims, wherein the printed code (104, 204, 304) is a unique two-dimensional code.

7. The method according to any one of the preceding claims, wherein the mobile device (400) is associated with a user identity (518, 618), and the method further comprising
transmitting (720) the user identity (518, 618) to the server (502, 602), and
storing (722) the identification data (508), the state of the opening device (106, 206, 306) and the user identity (618) on the server (502, 602).

8. The method according to any one of the preceding claims, further comprising
receiving (724) product information (516, 616) related to the identification data (508) from the server (502).

9. The method according to any one of the preceding claims, wherein the steps of capturing (702) the image data (606) depicting the section (102, 302) of the food package, identifying (704) the first sub-set (108, 308) of the image data (606), determining (706) the identification data (508) based on the first sub-set (108, 308), identifying (708) the second sub-set (110, 310) of the image data (606) depicting the opening device (106, 306), and determining (710) the state of the opening device (106, 306) based on the second sub-set (110, 310) of the image data (606) are performed in the server (602).

10. The method according to any one of the claims 1 to 8, further comprising
transmitting (726) the identification data (508) to the server (502), and
receiving (728) template data (510) related to the identification data (508) from the server (502),
wherein the template data (510) is taken into account in the step of determining (710) the state of the opening device (106, 206, 306).

11. A mobile device (400) configured to identify consumption of a food product held in a food package (100, 200, 300), said mobile device comprising
a camera (402) configured to capture image data (606) depicting a section (102, 302) of the food package, wherein the section (102, 202, 302) comprises a printed code (104, 204, 304) and an opening device (106, 206, 306),
a control circuit (804) configured to execute
a first identification function (810) configured to identify a first sub-set (108, 208, 308) of the image data (606) depicting the printed code (104, 204, 304),
an identification data determination function (812) configured to determine identification data (508) based on the first sub-set (108, 208, 308) of the image data (606),
a second identification function (814) configured to identify a second sub-set (110, 210, 310) of the image data depicting the opening device (106, 206, 306), and
a state determination function (816) configured to determine a state of the opening device (106, 206, 306) based on the second sub-set (110, 210, 310) of the image data, wherein the state is selected from a group consisting of an opened state or a closed state.

12. The mobile device according to claim 11, wherein the control circuit (804) is further configured to execute
a position determination function (818) configured to determine position data (512, 612) by using the mobile device (400), and
a transceiver (806) configured to
transmit the position data (512, 612) to a server (502, 602).

13. The mobile device according to claim 11 or 12, wherein the control circuit (804) is further configured to execute
a user identity determination function (820) configured to determine a user identity (518, 618),
wherein the transceiver (806) is further configured to transmit the user identity (518, 618) to a server (502, 602).

14. A server (602) configured to identify consumption of a food product held in a food package (100, 200, 300), said server comprising
a transceiver (906) configured to
receive image data (606) depicting a section (102, 202, 302) of the food package from a mobile device (400), wherein the section (102, 202, 302) comprises a printed code (104, 204, 304) and an opening device (106, 206, 306),
a control circuit (904) configured to execute
a first identification function (910) configured to identify a first sub-set (108, 208, 308) of the image data (606) depicting the printed code (104, 204, 304),
an identification data determination function (912) configured to determine identification data (508) based on the first sub-set (108, 308) of the image data (606),
a second identification function (914) configured to identify a second sub-set (110, 310) of the image data (606) depicting the opening device (106, 206, 306), and
a state determination function (916) configured to determine a state of the opening device (106, 206, 306) based on the second sub-set (110, 210, 310) of the image data (606), wherein the state is selected from a group consisting of an opened state or a closed state.

15. The server according to claim 14, wherein the transceiver (906) is further configured to
receive position data (612), and
the control circuit (904) is further configured to execute
a position data area mapping function (918) configured to determine if the position data (612) is within an activated area or a de-activated area.
